# FASCICULE DE BREVET EUROPEEN

(11) **EP 2 188 809 B1**
(45) Date de publication et mention de la délivrance du brevet: **13.04.2011**
(21) Numéro de dépôt: 08827716.5
(22) Date de dépôt: 13.08.2008
(51) Int. Cl.: G11B 33/04

(54) **BOÎTIER A DVD**
DVD-HÜLLE
DVD CASE

(30) Priorité: 20.08.2007 FR 0757093
(43) Date de publication de la demande: 26.05.2010
(73) Titulaire: Itey, Frédéric, F-91130 Ris-Orangis (FR)
(72) Inventeur: Itey, Frédéric, F-91130 Ris-Orangis (FR)
(74) Mandataire: Cabinet HERRBURGER
(86) Numéro de dépôt international: PCT/FR2008/051494
(87) Numéro de publication internationale: WO 2009/024725

(56) Documents cités:
- WO-A-01/83325
- WO-A-96/32719
- FR-A- 2 910 997
- US-A- 5 931 291
- US-A- 6 056 117
- US-A1- 2003 075 463
- US-A1- 2006 186 011
- US-A1- 2007 102 310
- US-A1- 2007 138 174

## Description

### Domaine de l'invention

La présente invention concerne un boîtier à DVD composée de deux parties, un fond et un couvercle, munis chacun d'un bord et relies par leur dos formant une charnière, le bord du fond et celui du couvercle côté ouverture, à l'opposé du côté dos, comportent près des extrémités, des paires d'organes d'enclipsage pour maintenir réunis les bords et, par suite, le couvercle et le dos lorsque le boîtier est fermé.

### Etat de la technique

Un boîitier à DVD tel que décrit dans le préambule de la revendication 1 est comme et est en particulier décrit dans le brevet US 5,931,291. Les boîtiers à DVD comportent, pour leur ouverture, une cavité d'accès munie d'un rebord servant de surface d'accrochage. Les deux rebords en regard des deux cavités d'accès l'une appartenant au couvercle, l'autre au fond, permettent de tirer sur les deux parties du boîtier pour, dans un premier temps, décrocher les organes d'enclipsage puis, ouvrir le boîtier. Cette opération nécessite deux mains. Elle est souvent difficile car l'effort que l'on exerce sur les deux rebords pour les écarter est un effort irrégulier qui déforme le couvercle ou le fond du boîtier sans séparer les organes d'enclipsage près de chaque extrémité de la tranche du boîtier.

L'opération d'ouverture du boîtier est particulièrement délicate à effectuer pour des personnes ayant des ongles longs ou pour les enfants.

Enfin, la tendance des fabricants de boîtier à réaliser un verrouillage de plus en plus ferme entre le couvercle et le fond du boîtier, rend l'opération d'ouverture plus difficile.

### But de l'invention

La présente invention a pour but de réaliser un boîtier à DVD muni de paires d'organes d'enclipsage ou autres organes équivalents pour maintenir le boîtier fermé, tout en permettant de l'ouvrir facilement et de préférence, avec une seule main, celle qui tient le boîtier, et cela quelle que soit par ailleurs la longueur des ongles de la personne qui veut ouvrir le boîtier.

### Exposé et avantages de l'invention

A cet effet, l'invention concerne un boîtier à DVD du type défini selon la revendication 1. Le bord côté ouverture du boîtier est muni d'un organe d'écartement déformable à deux extrémités appuyées l'une contre le couvercle et l'autre contre le dos, entre les paires d'organes d'enclipsage, cet organe d'écartement prenant deux formes :
- une forme neutre dans laquelle les deux extrémités sont rapprochées, le boîtier étant fermé, le couvercle et le dos enclipsés,
- une forme écrasée par l'action d'un doigt dans laquelle les deux extrémités sont écartées suffisamment pour écarter les deux parties du boîtier en décrochant les organes d'enclipsage du couvercle et ceux du dos pour libérer l'ouverture du boîtier.

Le boîtier à DVD selon l'invention se fabrique de manière simple comme un boîtier traditionnel, et le moule ou les moyens de fabrication ne nécessitent pratiquement que quelques modifications mineures pour la réalisation de l'organe d'écartement et cela en même temps que se fabrique le boîtier.

L'utilisation du boîtier, c'est-à-dire sa fermeture et la mise en place d'un disque par des chaînes de fabrication automatiques ne nécessite aucune modification par rapport aux chaînes utilisées actuellement.

Mais la solution selon l'invention offre un avantage considérable pour l'utilisateur car celui-ci peut ouvrir le boîtier d'une seule main, par exemple de la main gauche en tenant le boîtier dans sa main et en poussant sur l'organe d'écartement par exemple par son pouce. La pression exercée sur l'organe d'écartement qui le déforme se traduit par une poussée qui résulte de la compression exercée par le doigt sur l'organe d'écartement. Cette poussée se traduit par un effort et une course suffisants pour que les organes d'enclipsage des deux parties du boîtier se déverrouillent. A partir de ce moment, le boîtier s'ouvre de lui-même pour permettre de prendre ou d'un placer le disque.

L'effort exercé sur l'organe d'écartement se fait d'autant plus naturellement qu'il s'agit par exemple du pouce de la main qui tient le boîtier, ce dernier s'appuyant contre les doigts avec son dos, l'organe d'écartement étant situé du côté de la tranche du boîtier.

Cet organe d'écartement se remet en place automatiquement et naturellement lors de la fermeture du boîtier.

Enfin, l'organe d'écartement n'est pas mis en tension lorsque le boîtier est fermé de sorte qu'il ne tend pas à déverrouiller automatiquement le boîtier. L'organe d'écartement reste dans le contour du boîtier, lorsque celui-ci est emballé, un choc ne risque pas de commander l'ouverture même partielle du boîtier. Seule une intervention extérieure, c'est-à-dire une poussée sur l'organe d'écartement pour l'écraser permet de déverrouiller les paires d'organes d'enclipsage maintenant le boîtier fermé.

Suivant une autre caractéristique avantageuse, l'organe d'écartement est composé de deux éléments en forme de lame, articulés par une extrémité à chaque partie du boîtier dans la cavité d'accès, les deux éléments ayant, en position alignée ou sensiblement alignée, une longueur totale supérieure à la longueur d'ouverture des deux parties du boîtier correspondant au moins au déverrouillage des organes d'enclipsage et venant s'appuyer l'un contre l'autre par leurs autres extrémités lors de la fermeture du boîtier, pour prendre une forme triangulaire dont la base est comprise entre les extrémités d'appui et le sommet est la jonction des autres extrémités, constituant le point d'appui du doigt, pour déverrouiller le boîtier fermé en écrasant par cette poussée, la forme triangulaire de l'organe d'écartement pour le début de l'ouverture du boîtier.

Ces différentes formes de réalisation particulières de l'organe d'écartement comme des lames qui s'appuient l'une contre l'autre en se déformant dans leur position de repos ou en pivotant, permettent de former une structure à section triangulaire dont les deux points d'appui qui correspondent à la base du triangle sont naturellement plus rapprochés que lorsque le triangle est écrasé, cette dernière position correspondant à la position de déverrouillage des deux parties du boîtier.

La longueur de l'organe d'écartement, qu'il soit réalisé en une seule pièce ou en plusieurs pièces, lorsqu'il est en position écrasée et appuyé contre les deux parties du boîtier, est supérieure à la longueur de l'organe d'écartement prise entre ses deux points d'appui lorsqu'il est en position de repos, le boîtier étant fermé.

La différence entre les longueurs ou, du moins, la longueur de l'organe d'écartement en position écrasée, se définit en pratique de manière simple en fonction de la longueur d'action des organes d'enclipsage.

Cette longueur (ou surlongueur) tient également compte de la déformation des deux parties du boîtier sous l'effort d'écartement exercé par l'organe d'écartement au début de l'ouverture, avant que les organes d'enclipsage ne soient déverrouillés.

Suivant une autre caractéristique avantageuse, les éléments en forme de lame de l'organe d'écartement sont
- des éléments distincts des autres parties du boîtier et forment en combinaison, l'organe d'écartement, ou
- sont constitués par la paroi du boîtier se poursuivant dans la cavité d'accès pour former l'organe d'écartement, ou
- sont constitués par le prolongement du rebord des cavités d'accès pour former l'organe d'écartement.

Suivant une caractéristique plus particulière, les éléments en forme de lame formant l'organe d'écartement sont articulés l'un à l'autre, l'un des éléments étant reliés par son point d'appui à une partie du boîtier et l'autre élément à un point d'appui, venant librement s'appuyer contre l'autre partie, venant librement s'appuyer contre l'autre partie du boîtier.

Cette forme de réalisation est avantageusement développée en ce que les éléments en forme de lame, distincts du bord ou du rebord sont reliés aux parties par une articulation.

Suivant un autre développement avantageux, les éléments prolongeant les rebords dépassent tous deux du plan médian ou l'un dépasse et l'autre non et la somme de leurs longueurs est au moins égale à l'écartement des parties, nécessaire au déverrouillage des paires d'organes d'enclipsage.

Suivant une autre caractéristique avantageuse, l'organe d'écartement est formé du rebord, mobile de l'une des parties du boîtier et au moins une came dans la cavité d'accès de l'autre partie.

Dans ce cas, il est particulièrement avantageux que la came est dédoublée, chaque came étant située près de l'extrémité de la cavité d'accès prise dans le sens de la tranche du boîtier et la longueur du rebord mobile est supérieure à l'écartement des deux cames pour coopérer avec les deux cames.

Enfin, l'organe d'écartement comporte également une languette appartenant au rebord de la partie du boîtier pour coopérer d'abord avec le rebord mobile de l'autre partie du boîtier avant que le rebord mobile ne coopère avec au moins une came.

Ce dédoublement en quelque sorte de l'organe d'écartement ou sa réalisation en deux groupes d'éléments avec un élément commun à chaque fois, permet de réaliser le déverrouillage par une opération en deux phases, la première opération se fait par pression sur la longuette et sur le rebord qui se déforme et s'écarte jusqu'à ce que le rebord arrive en appui sur une came ou sur les deux cames et poursuit le mouvement d'ouverture.

Dans cette réalisation, la came a également l'avantage de toujours remettre la languette dans sa position neutre au moment de la fermeture de la boîte.

### Dessins

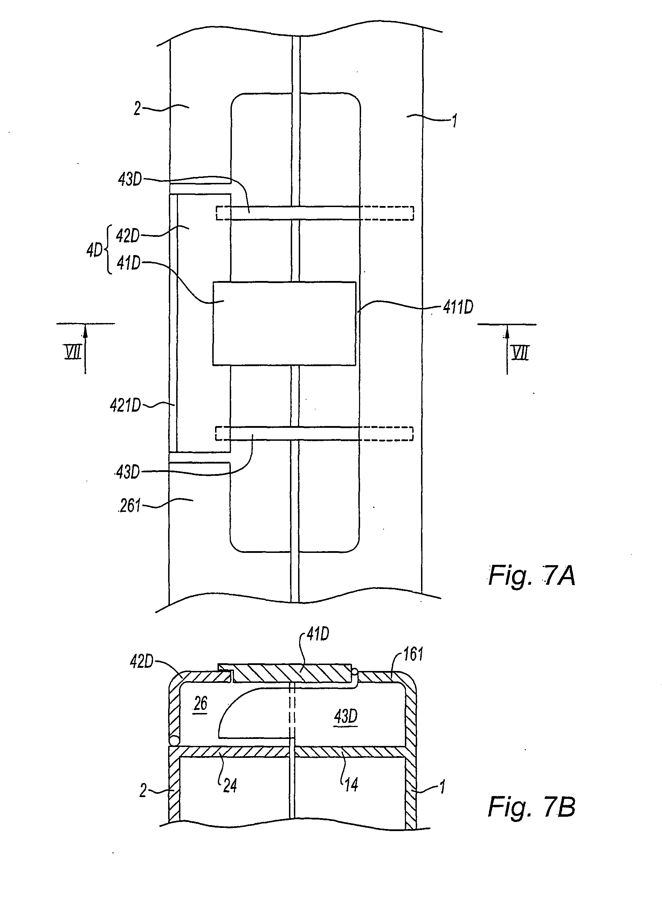

La présente invention sera décrite ci-après de manière plus détaillée à l'aide de différents modes de réalisation représentés partiellement et en coupe, à échelle fortement agrandie, dans les dessins annexés dans lesquels :
- la figure 1 est une vue axonométrique d'un boîtier à DVD, ouvert,
- la figure 2A est une à échelle très agrandie d'une partie de la tranche du boîtier à DVD de la figure 1, le couvercle et le fond étant légèrement écartés,
- la figure 2B est une vue en coupe selon II II de la figure 2A,
- les figures 3A-3C montrent schématiquement le mode de réalisation général du boîtier à DVD selon l'invention représenté

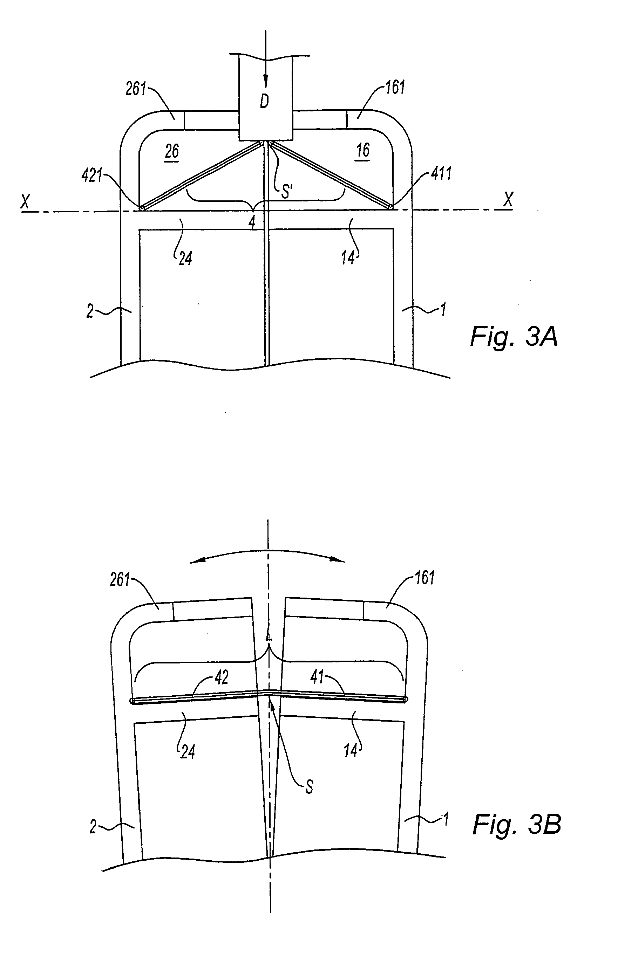

   * à la figure 3A en position fermée, avant une action d'ouverture,
   * à la figure 3B en position partiellement ouverte par l'organe d'écartement,

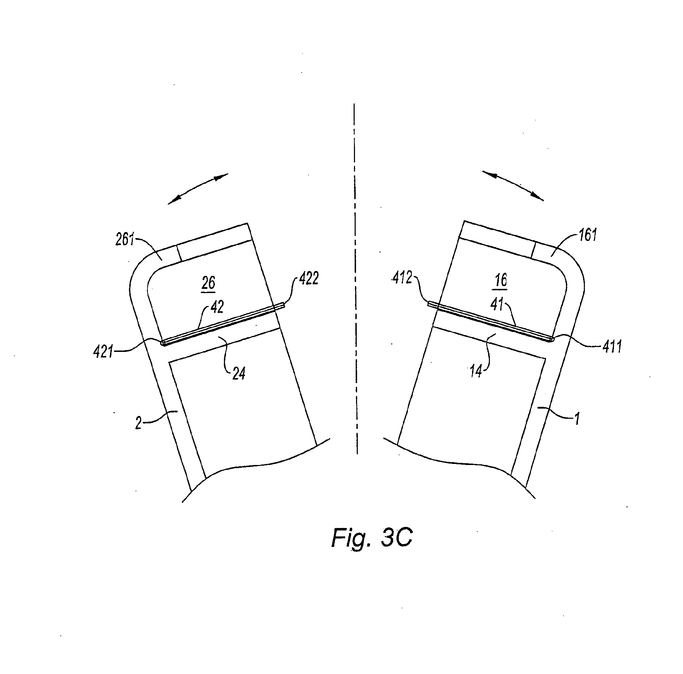

   * à la figure 3C en position largement ouverte,

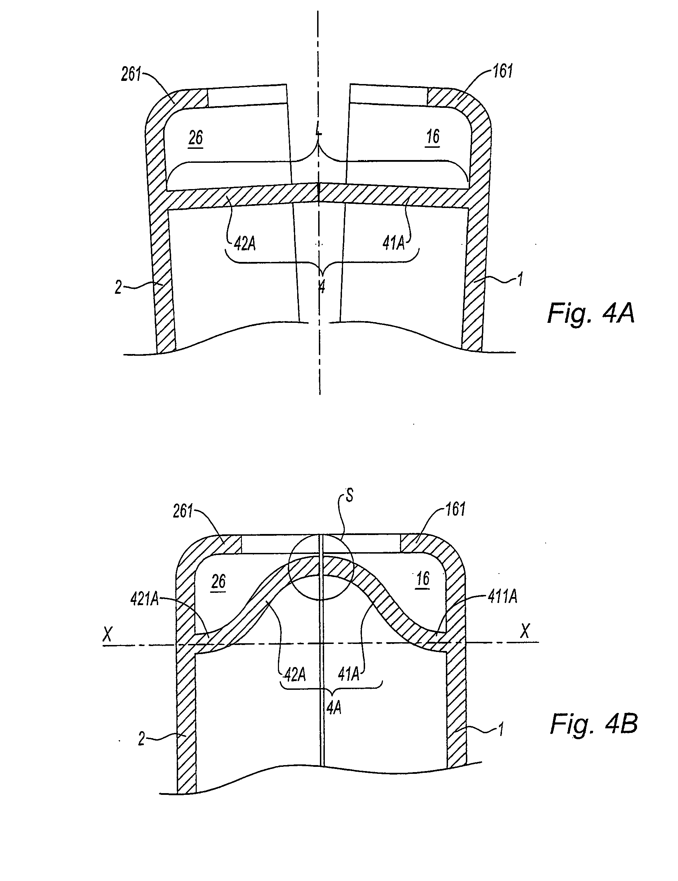

- les figures 4A, 4B montrent un second mode de réalisation d'un boîtier à DVD selon l'invention représenté
   * à la figure 4A, en position presque fermée (ou presque ouverte),
   * à la figure 4B, en position fermée,

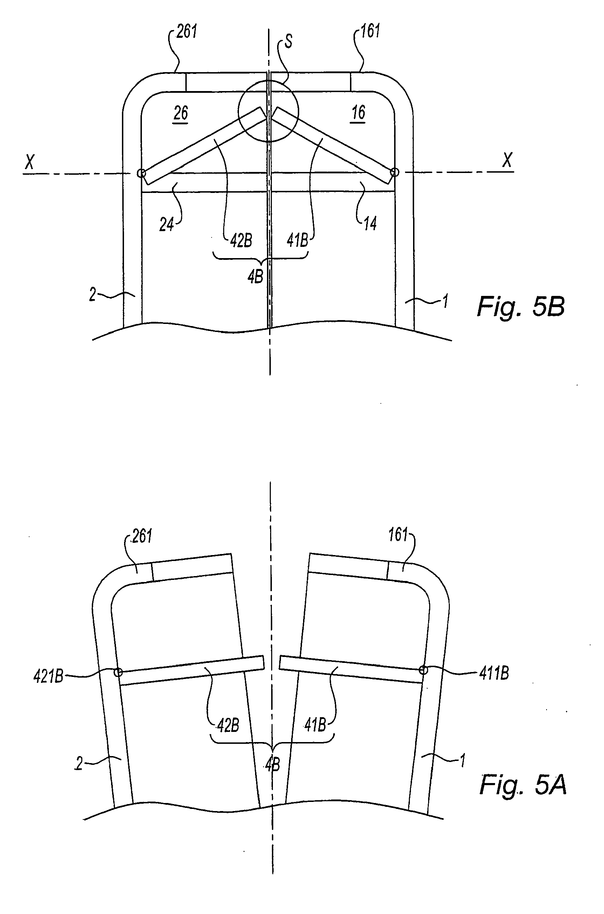

- les figures 5A, 5B montrent un troisième mode de réalisation d'un boîtier à DVD selon l'invention représenté
   * à la figure 5A, en position fermée,
   * à la figure 5B, en position de début d'ouverture,

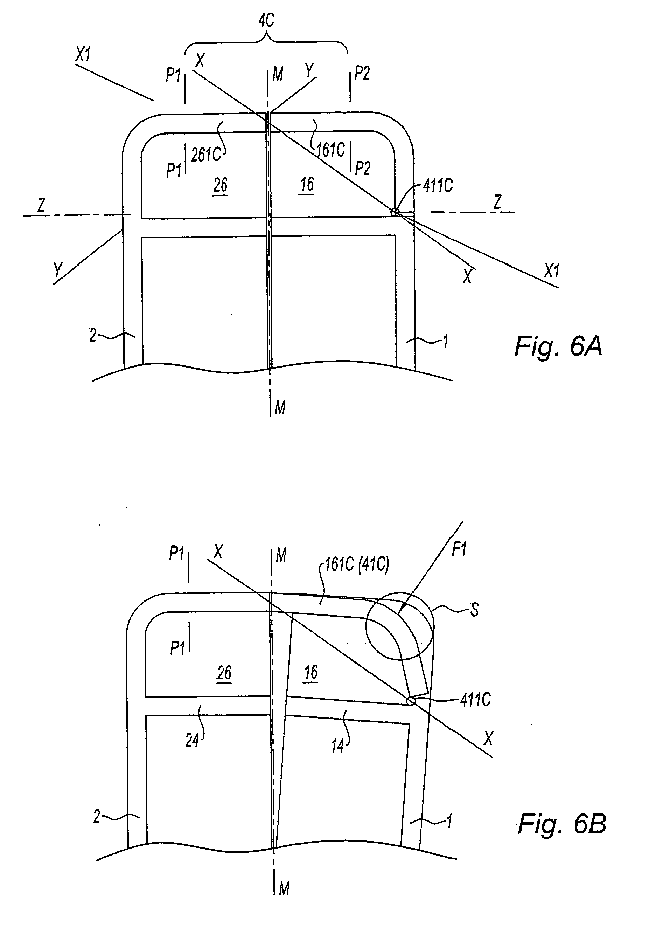

- les figures 6A, 6B montrent un quatrième mode de réalisation de l'invention représenté
   * en figure 6A, en position fermée,
   * en figure 6B, en position de début d'ouverture,
- le figures 7A, 7B montrent un cinquième mode de réalisation du dispositif selon l'invention
   * la figure 7A est une vue à échelle très agrandie de la tranche du boîtier au niveau de l'organe d'ouverture,
   * la figure 7B est une vue en coupe selon VII VII de la figure 7A,

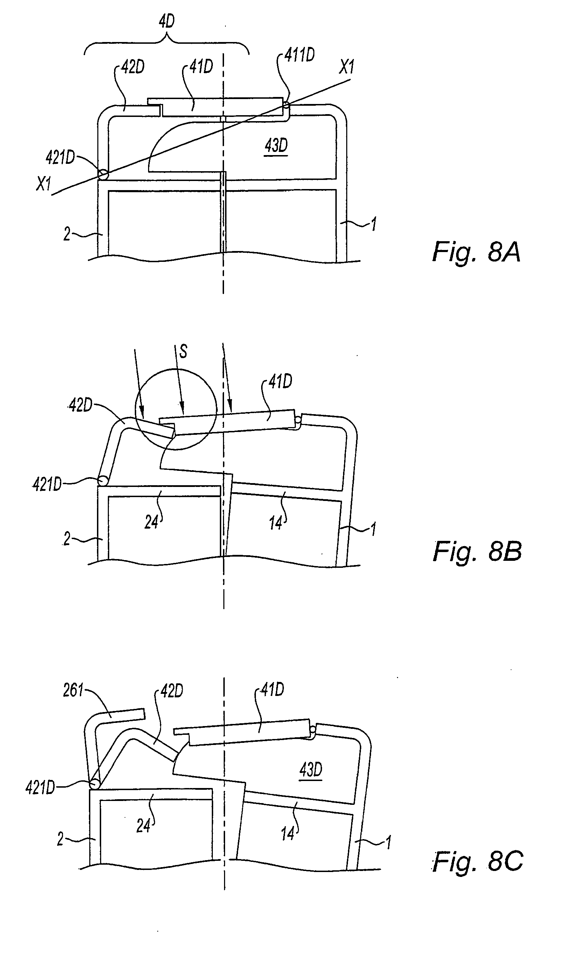

- les figures 8A-8C montrent la position fermée et les deux étapes caractéristiques d'ouverture du boîtier des figures 7A, 7B,

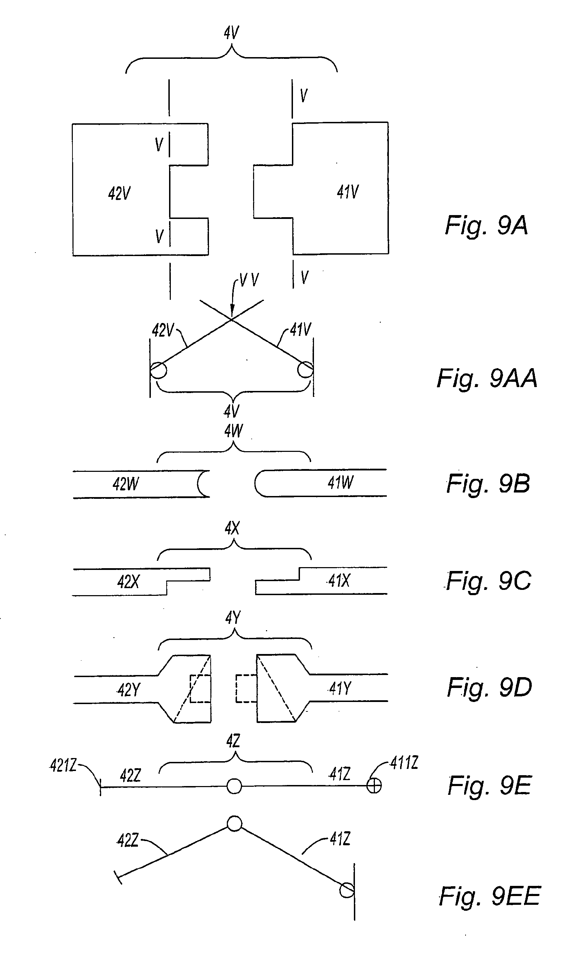

- les figures 9A-9E montrent différents autres modes de réalisation de l'organe d'écartement, à savoir
   * la figure 9A est une vue de dessus d'un premier mode de réalisation,
   • la figure 9AA montre schématiquement la position de l'organe d'écartement de la figure 9A lorsque le boîtier est fermé,
   * la figure 9B montre un second mode de réalisation de l'organe d'écartement,
   * la figure 9C montre un troisième mode de réalisation de l'organe d'écartement,
   * la figure 9D montre un quatrième mode de réalisation de l'organe d'écartement avec une variante en pointillés,
   * la figure 9E montre un cinquième mode de réalisation de l'organe d'écartement,
   • la figure 9EE montre l'organe d'écartement de la figure 9E en position neutre.

### Description de modes de réalisation de l'invention

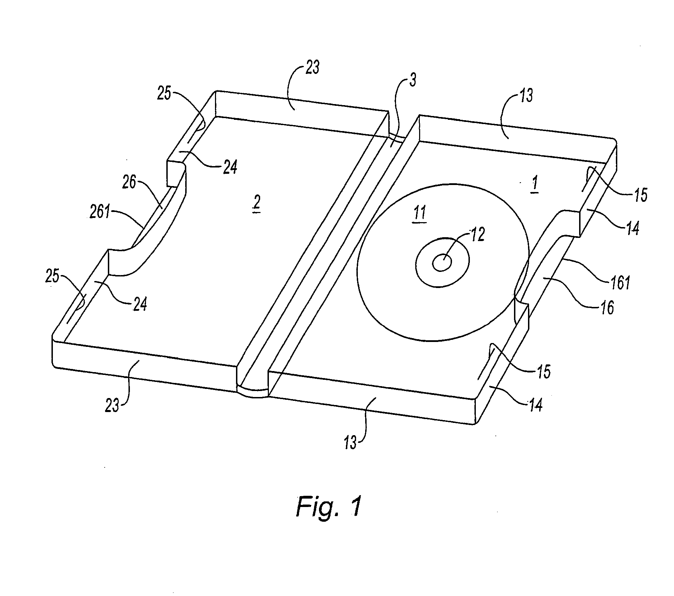

Selon la figure 1, l'invention concerne un boîtier à DVD formé de deux parties, un fond 1 muni d'un logement 11 pour le DVD et, en son milieu, une rosace 12 pour l'accrochage du DVD et un couvercle 2 relié au fond par un dos 3 formant une charnière. Le fond 1 et le couvercle 2 sont munis d'un bord 13, 14 ; 23, 24 sur trois côtés et les bords sont eux-mêmes munis à leur extrémité libre, d'une surface d'engagement de type feuillure, pour bien garantir la fermeture du boîtier lorsque le couvercle 2 est rabattu sur le fond 1.

Le côté du fond 1 et du couvercle 2 non tourné vers le dos 3 sera appelé la tranche du boîtier.

Le bord 14 du fond 1 et celui 24 du couvercle 2 comportent chacun deux organes d'enclipsage 15, 25 situés près de l'extrémité supérieure et de l'extrémité inférieure de la tranche. Ces organes d'enclipsage mâle/femelle 15, 25 sont destinés à s'engager et à s'accrocher l'un dans l'autre lorsque le boîtier est fermé. Ils forment chaque fois une paire d'organes d'enclipsage.

Ces paires d'organes d'enclipsage 15, 25 sont sensiblement symétriques par rapport au milieu de la tranche.

Le milieu de la tranche tant du fond 1 que du couvercle 2 est occupé par une cavité d'accès 16, 26 constituée par une forme légèrement en retrait du bord 14, 24 du fond 1 et du couvercle 2 pour réaliser également un rebord d'accrochage 161, 261 permettant la préhension de chaque partie 1, 2 pour l'ouverture du boîtier. Pour simplifier la description, la cavité d'accès est constituée de deux parties 16, 26 dans chacune des parties 1, 2 du boîtier. Ces deux parties seront elles-mêmes appelées, le cas échéant, cavités d'accès.

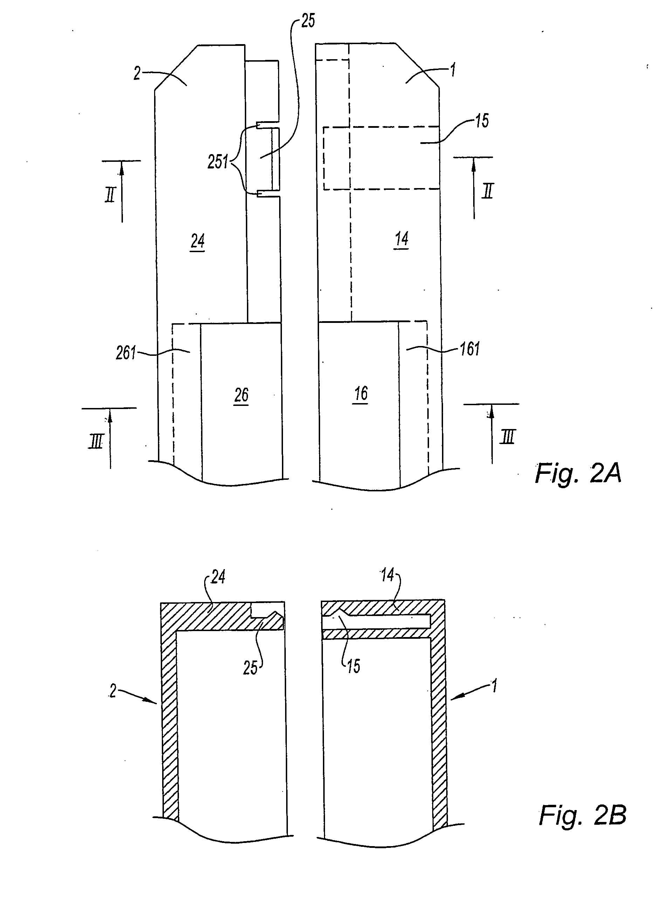

Les différentes caractéristiques du boîtier décrites ci-dessus et représentées à la figure 1 sont des caractéristiques connues. Certaines de ces caractéristiques au niveau de la tranche seront décrites ci-après de manière plus détaillée en référence aux figures 2A, 2B.

La figure 2A qui montre la partie supérieure de la tranche du boîtier dont le fond 1 et le couvercle 2 sont légèrement ouverts et écartés ; ils sont munis, pour l'un, d'un organe d'enclipsage mâle 25 et pour l'autre, d'un organe d'enclipsage femelle 15. L'organe d'enclipsage mâle 25 est séparé du bord 24 de l'une des parties, par exemple le couvercle 2, par deux découpes 251. L'organe d'enclipsage femelle 15 est constitué dans l'autre partie 1, par une cloison parallèle à la cloison extérieure 14 de cette partie 1 de boîtier.

L'organe d'enclipsage mâle 25 et l'organe d'enclipsage femelle 15 ont, outre la forme d'une languette et d'un logement à paroi parallèle au bord, l'un, un bossage et l'autre, une cavité pour assurer l'accrochage mécanique lorsque ces deux organes sont engagés l'un dans l'autre.

La figure 2A montre la cavité d'accès 16, 26 bordée du côté extérieur par le rebord 161, 261 du fond 1 et du couvercle 2.

Les figures 3A-3C montrent de façon schématique et à échelle très agrandie, une coupe du boîtier selon l'invention, faite par exemple par le plan de coupe III III représenté à la figure 2A.

Les éléments du boîtier déjà décrits ci-dessus et communs avec ceux d'un boîtier connu ne seront ni décrits ni représentés dans la mesure où ces éléments ne sont pas nécessaires à la compréhension de l'invention. Cette remarque s'applique également aux figures suivantes et à la description qui en est faite.

Selon la figure 3A, le boîtier comporte, de préférence au niveau du milieu de la cavité d'accès 16, 26, du côté de la tranche, c'est-à-dire du côté du bord d'ouverture du fond 1 et du couvercle 2, un organe d'écartement 4, déformable ayant deux extrémités 411, 421.

L'une 411 des extrémités est appuyée contre le fond 1 et l'autre 421 contre le couvercle 2. L'organe d'écartement 4 est ainsi situé entre les deux paires d'organes d'accrochage 15, 25 du couvercle 2 et du fond 1.

La figure 3A montre l'organe d'écartement 4 représenté schématiquement en forme de dièdre, en position de repos. Dans cette position, les deux extrémités 411, 422 de l'organe d'écartement 4 sont rapprochées, le boîtier étant représenté fermé avec le couvercle 2 et le dos 1 enclipsés l'un à l'autre.

Dans cette présentation fonctionnelle de réalisation, l'organe d'écartement 4 a une forme triangulaire dont la base correspond à ses deux extrémités d'appui 411, 421 4 et le sommet sert à l'actionnement. La ligne XX passe par les points d'appui 411, 421. Comme l'organe d'écartement a une certaine dimension dans la direction perpendiculaire au plan des figures 3A, 3B, 3C, il constitue un dièdre.

L'organe d'écartement 4 peut prendre une forme écrasée. Pour cela, en appuyant sur son dessus (sommet S) (figure 3A), on l'écrase et on l'aplatit jusqu'à la position représentée à la figure 3B. Cet aplatissement sous l'action d'un doigt (D) écarte suffisamment les deux extrémités 411, 421 pour que les deux parties 1, 2 du boîtier soient ainsi écartées l'une de l'autre par un effet de levier ou de démultiplication, suffisamment pour déverrouiller ou séparer les organes d'enclipsage des deux paires d'organes d'enclipsage 15, 25 ; la longueur (L) de l'organe d'écartement 4 en position écrasée est définie en fonction de la longueur nécessaire au décrochage des organes d'enclipsage 15, 25 non figurés dans ces vues.

Selon un mode de réalisation pratique, l'organe d'enclipsage 4 représenté aux figures 3A-3C, est supposé être formé de deux éléments 41, 42 qui peuvent être séparés l'un de l'autre dans la position de la figure 3B. Ils peuvent également être reliés par une articulation à leur autre extrémité 412, 422 (figure 3C) correspondant au sommet S. Dans ces conditions, la première extrémité de l'un des éléments 41, 42, par exemple l'extrémité 411 sera articulée à la partie 1 du boîtier alors que la première extrémité 421 de l'autre élément 42 sera en appui libre contre l'autre partie 2 du boîtier. Cette version correspond seulement aux figures 3A, 3B.

Le couvercle 2 et le fond 1 ne sont plus retenus et s'ouvrent par pivotement autour du dos 3 formant charnière, comme représenté schématiquement à la figure 3C.

Le mouvement de déverrouillage des organes d'enclipsage 15, 25 à l'aide de l'organe d'écartement 4 peut se faire avec un doigt, par exemple le pouce de la main qui tient seule, le boîtier à ouvrir.

Après libération des organes d'enclipsage, la partie non tenue, par exemple le fond 1, peut pivoter en poursuivant son mouvement d'ouverture jusqu'à 180°. On peut alors placer le disque dans le logement, ou si le disque est déjà dans le logement, l'extraire avec son autre main.

En résumé, ce mouvement d'ouverture du boîtier, qu'il contienne le disque ou qu'il s'agisse de l'ouvrir pour y placer un disque, se fait à l'aide d'une seule main et d'une manière très pratique grâce à l'effet de démultiplication créé par l'organe d'écartement 4. Cela permet notamment aux personnes ayant des ongles assez longs d'ouvrir un boîtier sans avoir à faire preuve d'ingéniosité et d'habileté toutes particulières avec les deux mains.

L'organe d'écartement 4 dont le principe fonctionnel général de l'invention est présenté à l'aide des figures 3A-3C peut être un organe distinct du bord extérieur 14, 24 ; 161, 261 du boîtier du côté de la tranche ou du bord 14, 24 prolongé dans la cavité d'accès. Il peut également s'agir d'un élément indépendant de ces deux parois.

Les figures 3A-3C montrent non seulement le principe général mais également ce cas particulier :l'organe d'écartement 4 est constitué dans ce mode de réalisation par deux branches 41, 42 reliées chacune à une partie 1, 2 du boîtier, au niveau du point d'appui 411, 421 par une liaison formant charnière, figurée par un petit cercle.

Au moulage, les deux éléments 41, 42 constituant l'organe d'écartement 4 sont sensiblement dans la position représentée à la figure 3B, pratiquement placés contre le bord 14, 24 dans la cavité d'accès 16, 26.

Partant de cette position qui correspond à une fermeture du boîtier avant le verrouillage des organes d'enclipsage, en poursuivant le mouvement de fermeture pour arriver à la position fermée représentée à la figure 3A, les extrémités 411, 421 des deux éléments 41, 42 de l'organe d'écartement 4 s'appuient l'une contre l'autre et les éléments se soulèvent naturellement pour prendre la position en forme de dièdre de la figure 3A.

Les éléments 41, 42 sont suffisamment rigides pour transformer la poussée exercée sur leur sommet S (figure 3A) et prendre la position étalée de la figure 3B, c'est-à-dire convertir la poussée en un effort suffisant pour dégager les organes d'enclipsage. Les éléments 41, 42 de l'organe d'écartement sont reliés à chaque extrémité au boîtier par une liaison élastique mais n'exerçant pas de couple de rappel suffisant pour passer automatiquement de la position de la figure 3A à celle de la figure 3B sans une poussée extérieure. Le rappel élastique exercé au niveau des articulations est simplement suffisant pour tenir les deux éléments 41, 42 de l'organe d'écartement 4 dans la position en dièdre de la figure 3A.

Les figures 4A, 4B montrent un autre mode de réalisation de l'organe d'écartement 4A, mettant en oeuvre le principe général décrit ci-dessus et, ayant en pratique, une forme de réalisation voisine du premier mode de réalisation. Mais dans ce cas, l'organe d'écartement 4A est réalisé par des prolongements du bord 14A, 24A dans la cavité d'accès et non comme un troisième élément, en plus du bord de la cavité d'accès et du bord du boîtier au niveau de la tranche.

Ces bords 41A, 42A de chaque cavité d'accès 16, 26 ont une certaine largeur dans la direction perpendiculaire au plan des figures 4A, 4B, sans toutefois occuper nécessairement toute la longueur des cavités d'accès 16, 26 dans la direction perpendiculaire à la feuille des figures. La longueur (L) des éléments 41A, 42A correspond à un dépassement suffisant pour que dans la position d'appui représentée à la figure 4A, les organes d'enclipsage (figures 2A, 2B) ne soient pas encore en prise ; ou soient déjà dégagés, selon le sens du mouvement effectué avant ou après la position représentée à la figure 4A.

En supposant que la position de la figure 4A représente le début de la fermeture du boîtier, lorsque le couvercle 2 et le fond 1 seront complètement appliqués l'un contre l'autre et les organes d'enclipsage engagés, les éléments 41A, 42A donneront à l'organe d'écartement 4A une forme cintrée en chapeau de gendarme comme celle représentée à la figure 4B.

Il s'agit là encore d'une forme de triangle qui est ici curviligne avec deux extrémités 411A, 421A correspondant aux points d'appui situés sur la ligne XX et le sommet S que l'on pousse pour ouvrir le boîtier.

Une poussée exercée sur le sommet S de ce triangle écartera les deux extrémités 411A, 421A de l'organe d'écartement 4A pour venir dans la position de la figure 4A. Les organes d'enclipsage étant par définition dégagés, l'ouverture du boîtier se poursuit normalement.

Comme dans le mode de réalisation précédent et cela s'applique aussi à tous les modes de réalisation décrits ultérieurement, il suffit d'un doigt de la main qui tient le boîtier pour enfoncer l'organe d'écartement et l'écraser pour déverrouiller le boîtier.

Les figures 5A, 5B montrent une variante du mode de réalisation des figures 4A, 4B, l'organe d'écartement 4B étant constitué de deux éléments 41B, 42B dont chacun est une partie du côté 14, 24 des cavités d'accès 16, 26. Chaque élément 41B, 42B est relié au côté du couvercle 2 et du fond 1 par une charnière 411 B, 421B et non sur toute l'épaisseur. Dans ces conditions, lorsque les deux éléments constituant l'organe d'écartement sont poussés l'un contre l'autre, à la fermeture de la boîte, ils prennent la position en dièdre représentée à la figure 5B, en pivotant autour de l'extrémité d'appui 411B, 421B qui constitue une charnière.

L'ouverture se fait dans les mêmes conditions que ci-dessus par appui sur le sommet S du dièdre pour arriver dans une position qui précède celle de la figure 5A dans laquelle les organes d'enclipsage sont dégagés. On peut alors ouvrir le boîtier comme cela a été décrit ci-dessus.

Les figures 6A, 6B montrent un troisième mode de réalisation de l'invention dans lequel l'organe d'écartement 4C est constitué par une partie du bord extérieur du boîtier au niveau de la cavité d'accès et couvrant en partie la cavité d'accès 16, 26. En fait, le bord 14, 24 du boîtier qui se prolonge dans la cavité d'accès est conservé mais le rebord 161, 261 de la cavité d'accès 16, 26 qui aligné sur le bord extérieur du boîtier au niveau de la cavité d'accès est lui-même prolongé jusqu'au plan de jonction MM des deux parties 1, 2.

L'organe d'écartement 4C est formé de deux éléments constitués chacun par une légère transformation du rebord 161, 261 de la cavité d'accès 16, 26 ou d'une fraction de la longueur du rebord de la cavité d'accès 16, 26.

A la figure 6A, on a représenté la position (P1P1) et (P2P2) du rebord 161, 261 de la cavité d'accès 16, 26 telle qu'elle se présente à la figure 2A.

Selon l'invention, l'organe d'écartement 4C permet différentes variantes de réalisation.

Une première variante consiste à prolonger le rebord 161, 261 de cavité 16, 26 de chacune des parties 1, 2 jusqu'au plan médian MM.

L'un des rebords prolongé 161 formé l'élément 41C de l'organe 4C ; il est relié de manière articulée 411 C à la partie restante du boîtier. On a ainsi un point d'appui 411 C fixé par l'articulation ; l'autre point d'appui à l'autre extrémité de l'organe d'écartement 4C est le contact de ce rebord prolongé contre l'autre rebord prolongé 261C.

En appuyant dans le sens de la flèche F1 (figure 6B) sur le rebord 161 C, on le fait pivoter en l'écrasant et en le déformant éventuellement ; ce mouvement écarte les points d'appui 411 C, 421C et permet de déverrouiller les organes d'enclipsage comme cela a été décrit dans les modes de réalisation précédents. La ligne (XX) passe dans ce cas par les points d'appui de l'organe d'écartement ; la zone d'appui 411 C, 421C de cette forme de triangle curviligne de l'organe d'écartement 4C porte la référence S.

La déformation est schématisée ici par le pivotement autour de l'articulation 411 C complété par une déformation du rebord prolongé 161C. Mais on peut également supprimer l'articulation 411 C et affaiblir le rebord pour que celui-ci soit suffisamment déformable pour s'écraser et écarter ses extrémités, c'est-à-dire les points d'appui (ligne XX) et permettre d'atteindre la position de déverrouillage représentée à la figure 6B.

Selon une variante, la disposition est symétrique dans la mesure où les deux rebords prolongés 161C, 261C sont suffisamment souples pour pouvoir être écrasés indifféremment l'un ou l'autre ou les deux à la fois et atteindre la position d'écartement des deux parties 1, 2 du boîtier représenté à la figure 6B.

Cette réalisation est symétrique en ce que les rebords de la cavité 16, 26 sont simplement prolongés jusqu'au plan médian MM. Il est également possible de prévoir une réalisation non symétrique en ne modifiant pas le rebord 261 de l'une (2) des parties par exemple en le laissant dans la position (P1P1) et en prolongeant le rebord 161C de l'autre partie 1 du boîtier jusqu'à ce plan (P1P1) (et en ne l'arrêtant pas au plan médian MM).

La ligne passant par la base des points d'appui pour les dif férentes variantes sera alors la ligne (X1X1) pour la dernière variante évoquée ci-dessus ou encore la ligne (YY) pour un appui sur le côté gauche constituant alors l'organe d'écartement ou la ligne (ZZ) si l'on appuie sur les deux rebords constituant alors globalement l'organe d'écartement.

Les figures 7A, 7B montrent un autre mode de réalisation combinant en partie certains des moyens des modes de réalisation déjà décrits ci-dessus.

Pour la compréhension de ce mode de réalisation, il faut se reporter à la vue de la figure 7A par comparaison à celle de la figure 2A.

Selon ce mode de réalisation, l'organe d'écartement 4D est constitué de deux éléments 41D, 42D, l'un qui est une languette 41D prolongeant le rebord 161 de la cavité d'accès 16 de l'une 1 des parties du boîtier et l'autre 42D, constituée par une partie du rebord 261 de l'autre partie 2 du boîtier.

La languette 41D et la partie 42D du rebord 261 sont reliées à leur base respective par un point d'appui 411 D, 421D qui est, de préférence, une charnière réalisée dans la matière.

Cela permet à ces deux éléments 41D, 42D constituant l'organe d'écartement 4D de pivoter pour passer de la position neutre représentée aux figures 7A, 7B dans laquelle les points d'appui ne sont pas écartés, vers une position dans laquelle les deux points d'appui sont écartés. D'une certaine manière, ce mode de réalisation correspond à celui décrit en liaison avec les figures 6A, 6B et le mouvement d'ouverture s'explique alors de la même manière.

Toutefois, il est avantageux de compéter cet organe d'écartement 4D par des cames 43D pour constituer en quelque sorte, un second organe d'écartement prenant la relève du premier organe d'écartement ou en le remplaçant.

A cet effet, la cavité d'accès 16 est munie de deux cames 43D transversales, situées près des deux extrémités de la cavité d'accès. La largeur dans le sens de la tranche, du rebord mobile 42D de la cavité d'accès 26 est choisie en fonction de cet écartement de manière à couvrir les deux cames 43D.

La languette 41 D est située entre les deux cames 43D et ne peut pas s'appuyer sur celles-ci. Elle ne peut s'appuyer ou coopérer en s'arc-boutant, que contre le rebord mobile 42D.

Dans ces conditions, le double mouvement d'ouverture assisté se fait comme représenté aux figures 8A-8C.

La figure 8A représente la position initiale analogue à celle de la figure 7B. Toutefois, dans cette figure, on a tracé la ligne (X1X1) passant par les points d'appui 411 D, 421D des deux éléments 41D, 42D de l'organe d'écartement 4D constitué par la languette et le rebord mobile.

En exerçant une poussée d'une façon relativement peu précise sur la languette 41D ou le rebord 4 1 D, par exemple à la jonction de la languette et du rebord mobile, on enfonce le sommet S de l'organe d'écartement 4D pour le rapprocher de la ligne de jonction (X1X1) passant par les points d'appui 411D, 421D.

La rampe 43D est choisie pour qu'à un certain moment (figure 8C), le rebord mobile 42D la rencontre et glisse sur celle-ci (43D) en la poussant. Cela permet de poursuivre la course d'ouverture avec un effet de levier pour séparer les organes d'enclipsage et ouvrir le boîtier.

Selon une autre variante, on supprime la languette 41D ; l'organe d'écartement 4D se compose alors du rebord mobile 41D et de la ou des cames 43D portées par l'autre partie 1 du boîtier.

Les figures 9A-9E représentent différents modes de réalisation d'un organe d'écartement.

Selon la vue de dessus de la figure 9A, les bords des deux éléments 41V, 42V d'un organe d'écartement 4V, destinés à coopérer, ont une forme complémentaire; l'un, une forme de créneau et l'autre, une forme en saillie de façon que lorsque les deux éléments se rejoignent, ils s'appuient le long de la ligne VV de chacun des éléments qui devient le sommet du dièdre qu'ils forment. Une poussée sur les extrémités des éléments qui dépassent ou sur le sommet du dièdre permet d'écraser l'organe d'écartement et d'ouvrir le boîtier comme cela a déjà été décrit. La position neutre est représentée schématiquement en coupe à la figure 9AA montrant les points d'appui des extrémités de l'organe d'écartement 4V ainsi constitué.

La figure 9B est une vue en coupe de bords complémentaires de deux éléments 41W, 42W constituant l'organe d'écartement 4W et qui s'imbriquent pour pouvoir pivoter l'un par rapport à l'autre.

La figure 9C montre une forme complémentaire avec une partie en saillie 41X et une partie en retrait 42X de l'organe 4X.

La figure 9D montre une augmentation de l'épaisseur de chacune des extrémités des deux éléments 41Y, 42Y de l'organe d'écartement 4Y pour agrandir la surface d'appui. Une forme complémentaire en relief représentée en pointillés peut être prévue comme variante de ce mode de réalisation.

Une forme bombée des faces avant est également représentée comme autre variante.

La figure 9E montre un organe d'écartement 4Z constitué de deux éléments 41Z, 42Z reliés de manière articulée l'un à l'autre par exemple, par une charnière réalisée dans la matière. L'une des extrémités 411Z de cet organe d'écartement 4Z est reliée par une charnière à l'une des parties du boîtier et l'autre 421Z prend appui librement sur l'autre partie du boîtier.

La position neutre de cet organe d'écartement est représentée schématiquement à la figure 9EE.

## Revendications

1. Boîtier à DVD composée de deux parties, un fond (1) et un couvercle (2), munis chacun d'un bord (13, 14, 23, 24) et reliés par leur dos formant une charnière (3), le bord du fond (14) et celui du couvercle côté ouverture (24), à l'opposé du coté dos, comportent près des extrémités, des paires d'organes d'enclipsage (15, 25) pour maintenir réunis les bords et, par suite, le couvercle et le dos lorsque le boîtier est fermé,
le bord côté ouverture du boîtier est étant muni d'un organe d'écartement (4, 4A, 4B, 4C, 4D, 4Z) déformable à deux extrémités (411, 421, 411A, 421A, 411B. 421B, 411D, 421D, 421Z, 411 Z) appuyées l'une contre le couvercle et l'autre
contre le dos, entre les paires d'organes d'enclipsage, cet organe d'écartement prenant deux formes:
- une première forme neutre dans laquelle les deux extrémités sont rapprochées, le boîtier étant fermé, le couvercle et le dos enclipsés,
- une deuxième forme,
**caractérisé en ce que**
la deuxième forme est une forme écrasée par l'action d'un doigt dans laquelle les deux extrémités sont écartées suffisamment pour écarter les deux parties du boîtier en décrochant les organes d'enclipsage du couvercle et ceux du dos pour libérer l'ouverture du boîtier.

2. Boîtier à DVD selon la revendication 1, selon lequel l'organe d'écartement est composé de deux éléments en forme de lame (41, 42), articulés par une extrémité (411, 421) à chaque partie (1, 2) du boîtier dans une cavité d'accès (16, 26), les deux éléments ayant, en position alignée ou sensiblement alignée, une longueur totale (L) supérieure à la longueur d'ouverture des deux parties du boîtier correspondant au moins au déverrouillage des organes d'enclipsage et venant s'appuyer l'un contre l'autre (41, 42) par leurs autres extrémités (412, 422) lors de la fermeture du boîtier, pour prendre une forme triangulaire dont la base est comprise entre les extrémités d'appui (411, 421) et le sommet (S) est la jonction des autres extrémités (412, 422), constituant le point d'appui du doigt (D), pour déverrouiller le boîtier fermé en écrasant par cette poussée, la forme triangulaire de l'organe d'écartement pour le début de l'ouverture du boîtier.

3. Boîtier à DVD selon la revendication 1, selon lequel les éléments en forme de lame de l'organe d'écartement (4) sont
- des éléments distincts (41, 42) des autres parties du boîtier et forment en combinaison, l'organe d'écartement (4), ou
- sont constitués (41A, 42A) par la paroi (14, 24) du boîtier se poursuivant dans la cavité d'accès (16, 26) pour former l'organe d'écartement (4A), ou
- sont constitués (41C, 42C) par le prolongement du rebord (161, 261) des cavités d'accès (16, 26) pour former l'organe d'écartement (4C).

4. Boîtier à DVD selon la revendication 3, selon lequel
les éléments en forme de lame (41B, 42B), distincts du bord (14, 24) ou du rebord (161, 261) sont reliés aux parties (1, 2) par une articulation (411B, 421B).

5. Boîtier à DVD selon la revendication 3, selon lequel
les éléments (41C, 42C) prolongeant les rebords (61, 261) dépassent tous deux du plan médian (MM) ou l'un dépasse et l'autre non et la somme (L) de leurs longueurs est au moins égale à l'écartement des parties (1, 2), nécessaire au déverrouillage des paires d'organes d'enclipsage (15, 25).

6. Boîtier à DVD selon la revendication 1, selon lequel
l'organe d'écartement (D) est formé du rebord (42D) (261), mobile de l'une des parties (1) du boîtier et au moins une came (43D) dans la cavité d'accès (16) de l'autre partie (2).

7. Boîtier à DVD selon la revendication 6, selon lequel
la came (43D) est dédoublée, chaque came étant située près de l'extrémité de la cavité d'accès (16) prise dans le sens de la tranche du boîtier et la longueur du rebord mobile (42) est supérieure à l'écartement des deux cames (43D) pour coopérer avec les deux cames.

8. Boîtier à DVD selon la revendication 6, selon lequel
l'organe d'écartement (4D) comporte également une languette (4 1 D) appartenant au rebord (161) de la partie (1) du boîtier pour coopérer d'abord avec le rebord mobile (42D) (261B) de l'autre partie (2) du boîtier avant que le rebord mobile (42D) ne coopère avec au moins une came (43D).

9. Boîtier à DVD selon la revendication 3, selon lequel
les éléments en forme de lame (41Z, 42Z) formant l'organe d'écartement (4Z) sont articulés l'un à l'autre, l'un des éléments (41C) étant reliés par son point d'appui (411Z) à une partie (1) du boîtier et l'autre élément à un point d'appui (421Z), venant librement s'appuyer contre l'autre partie (2), venant librement s'appuyer contre l'autre partie (2) du boîtier.

## Claims

1. DVD case composed of two parts, a base (1) and a lid (2), the two parts each being provided with an edge (13, 14, 23, 24) and being connected by their backs which form a hinge (3), the edge of the base (14) and the edge of the lid on the opening side (24), opposite the back side, comprise, close to the ends, pairs of snap members (15, 25) for keeping the edges, and consequently the lid and the back, connected when the case is closed,
the edge on the opening side of the case being provided with a spacer member (4, 4A, 4B, 4C, 4D, 4Z) which is deformable at two ends (411, 421, 411A, 421A, 411B, 421B, 411D, 421D, 421Z, 411Z), of which one rests against the lid and the other against the back, between the pairs of snap members, the spacer member having two forms:
- a first, neutral form in which the two ends are close together, the case being closed, the lid and the back snapped together,
- a second form,
**characterised in that** the second form is a form depressed by the action of a finger, in which the two ends are moved apart sufficiently to separate the two parts of the case by unlocking the snap members of the lid and those of the back in order to allow the case to open.

2. DVD case according to claim 1, according to which the spacer member is composed of two strip-like elements (41, 42) which are articulated at one end (411, 421) with each part (1, 2) of the case in an access cavity (16, 26), the two elements having, in the aligned or substantially aligned position, a total length (L) greater than the opening length of the two parts of the case corresponding at least to unlocking of the snap members, and coming to rest one against the other (41, 42) by their other ends (412, 422) when the case is closed in order to assume a triangular shape the base of which is included between the supporting ends (411, 421) and the apex (S) of which is the junction of the other ends (412, 422), constituting the point of application of the finger (D) in order to unlock the closed case by depressing, by that pressure, the triangular shape of the spacer member in order to start opening of the case.

3. DVD case according to claim 1, according to which the strip-like elements of the spacer member (4)
- are elements (41, 42) separate from the other parts of the case and form, in combination, the spacer member (4), or
- are constituted (41A, 42A) by the wall (14, 24) of the case continuing into the access cavity (16, 26) to form the spacer member (4A), or
- are constituted (41C, 42C) by the prolongation of the rim (161, 261) of the access cavities (16, 26) to form the spacer member (4C).

4. DVD case according to claim 3, according to which the strip-like elements (41B, 42B) which are separate from the edge (14, 24) or from the rim (161, 261) are connected to the parts (1, 2) by an articulation (411B, 421B).

5. DVD case according to claim 3, according to which the elements (41C, 42C) prolonging the rims (61, 261) both extend beyond the mid-plane (MM) or one does and one does not, and the sum (L) of their lengths is at least equal to the spacing of the parts (1, 2) that is necessary for unlocking of the pairs of snap members (15, 25).

6. DVD case according to claim 1, according to which the spacer member (D) is formed by the movable rim (42D) (261) of one of the parts (1) of the case and at least one cam (43D) in the access cavity (16) of the other part (2).

7. DVD case according to claim 6, according to which the cam (43D) is split, each cam being located close to the end of the access cavity (16) taken in the direction of the edge of the case, and the length of the movable rim (42) is greater than the spacing of the two cams (43D) in order to cooperate with the two cams.

8. DVD case according to claim 6, according to which the spacer member (4D) also comprises a tab (41D) belonging to the rim (161) of the part (1) of the case in order to cooperate first with the movable rim (42D) (261B) of the other part (2) of the case before the movable rim (42D) cooperates with at least one cam (43D).

9. DVD case according to claim 3, according to which the strip-like elements (41Z, 42Z) forming the spacer member (4Z) are articulated with one another, one of the elements (41C) being connected by its support point (411Z) to one part (1) of the case and the other element at a support point (421Z) coming to rest freely against the other part (2), coming to rest freely against the other part (2) of the case.

## Patentansprüche

1. DVD-Hülle, bestehend aus zwei einen Boden bzw. eine Rückseite (1) und einen Deckel (2) bildenden Teilen, die jeweils mit einer Umrandung (13, 14, 23, 24) versehen sind und durch ihren ein Scharnier (3) bildenden Rücken miteinander verbunden sind, wobei die Umrandung (14) des Bodens und diejenige (24) des Deckels auf der der Seite des Rückens gegenüberliegenden Öffnungsseite, nahe den Enden, Paare von Einclipsmitteln (15, 25) aufweisen, um die Umrandungen und demzufolge auch den Deckel und die Rückseite zusammenzuhalten, wenn die Hülle geschlossen ist, wobei die Umrandung an der Öffnungsseite der Hülle, zwischen den Einclipsmittel-Paaren, mit einer Vorrichtung zum Auseinanderdrücken (4, 4A, 4B, 4C, 4D, 4Z) versehen ist, die an zwei zwischen den Einclipsmittel-Paaren gelegenen Enden (411, 421, 411A, 421A, 411B, 421B, 411D, 421D, 421Z, 411Z) verformbar ist, von denen das eine am Deckel und das andere an der Rückseite anliegt, wobei diese Auseinanderdrück-Vorrichtung zwei Formen annehmen kann:
- eine erste, so genannte neutrale Form, in der die beiden Enden einander angenähert sind, die Hülle geschlossen und der Deckel und die Rückseite eingeclipst sind,
- eine zweite Form,
**dadurch gekennzeichnet, dass** die zweite Form eine durch eine Aktion mit einem Finger zusammengedrückte Form ist, in der die beiden Enden ausreichend auseinander gedrückt sind, um beim Aushaken der Einclipsmittel des Deckels und derjenigen der Rückseite die beiden Teile der Hülle auseinander zu drücken, damit die Hülle geöffnet werden kann.

2. DVD-Hülle nach Anspruch 1, demgemäß die Auseinanderdrück-Vorrichtung aus zwei Elementen in Plättchenform (41, 42) besteht, die an jedem Teil (1, 2) der Hülle in einer Zugriffsvertiefung (16, 26) durch ein Ende (411, 421) schwenkbar angebracht sind, wobei die in einer geraden oder annähernd geraden Linie ausgerichteten Elemente eine Gesamtlänge (L) haben, die größer als die Länge zum Öffnen der beiden Teile der Hülle ist, die zumindest der Entriegelung der Einclipsmittel entspricht, und die (41, 42) sich beim Schließen der Hülle mit ihren anderen Enden (412, 422) aneinander legen, um die Form eines Dreiecks anzunehmen, dessen Basis zwischen den Auflagerenden (411, 421) enthalten ist und dessen Scheitel (S) die Verbindungsstelle der anderen Enden (412, 422) ist, die die Stelle für das Anlegen des Fingers (D) bildet, um die geschlossene Hülle zu entriegeln, indem durch diesen Druck die Dreiecksform der Auseinanderdrück-Vorrichtung zu Beginn des Öffnens der Hülle zusammengedrückt wird.

3. DVD-Hülle nach Anspruch 1, demgemäß die plättchenförmigen Elemente der Auseinanderdrück-Vorrichtung (4):
- sich von den anderen Teilen der Hülle unterscheidende Elemente (41, 42) sind und in Kombination die Auseinanderdrück-Vorrichtung (4) bilden, oder
- durch die Zwischenwand (14, 24) der Hülle gebildet sind (41A, 42A) und sich in der Zugriffsvertiefung (16, 26) fortsetzen, um die Auseinanderdrück-Vorrichtung (4A) zu bilden, oder
- durch die Verlängerung des umgebogenen Randes (161, 261) der Zugriffsvertiefungen (16, 26) gebildet sind (41C, 42C), um die Auseinanderdrück-Vorrichtung (4C) zu bilden.

4. DVD-Hülle nach Anspruch 3, demgemäß die plättchenförmigen Elemente (41B, 42B), die sich von der Umrandung (14,24) oder dem umgebogenen Rand (161, 261) unterscheiden, durch ein Gelenk (411B, 421B) mit den beiden Teilen der Hülle (1, 2) verbunden sind.

5. DVD-Hülle nach Anspruch 3, demgemäß die die umgebogenen Ränder (61, 261) verlängernden Elemente (41C, 42C) alle beide über die Mittellinie (MM) überstehen oder das eine über sie übersteht und das andere nicht, und die Summe (L) ihrer Längen zumindest gleich dem Abstand der Teile (1, 2) ist, der für das Entriegeln der Einclipsmittel-Paare (15, 25) notwendig ist.

6. DVD-Hülle nach Anspruch 1, demgemäß die Auseinanderdrück-Vorrichtung (D) vom umgebogenen Rand (42D) (261), der an einem der Teile (1) der Hülle beweglich ist, und zumindest einem Nocken (43D) in der Zugriffsvertiefung (16) des anderen Teils (2) gebildet ist.

7. DVD-Hülle nach Anspruch 6, demgemäß der Nocken (43D) zweigeteilt ist, wobei sich jeder Nocken, in Richtung der Kante der Hülle gesehen, nahe am Ende der Zugriffsvertiefung (16) befindet und die Länge des beweglichen umgebogenen Randes (42) größer als der Abstand der beiden Plättchen (43D) ist, um mit diesen beiden Nocken zusammenzuwirken.

8. DVD-Hülle nach Anspruch 6, demgemäß die Auseinanderdrück-Vorrichtung (4D) ebenfalls eine zum umgebogenen Rand (161) des Teils (1) der Hülle gehörende Zunge (41D) aufweist, um zuerst mit dem beweglichen umgebogenen Rand (42D) (261B) des anderen Teils (2) der Hülle zusammenzuwirken, bevor der bewegliche umgebogene Rand (42D) mit zumindest einem Nocken (43D) zusammenwirkt.

9. DVD-Hülle nach Anspruch 3, demgemäß die die Auseinanderdrück-Vorrichtung (4Z) bildenden plättchenförmigen Elemente (41Z, 42Z) gelenkig miteinander verbunden sind, wobei eines der Elemente (41C) durch seine Druckstelle (411Z) mit einem Teil (1) der Hülle und das andere Element mit einer Druckstelle (421Z) verbunden ist, die frei an dem anderen Teil (2) anliegt, die frei am anderen Teil (2) der Hülle anliegt.
